Europäisches Patentamt

(19) European Patent Office

Office européen des brevets

(11) Publication number: **0 194 240**
**B1**

(12) **EUROPEAN PATENT SPECIFICATION**

(45) Date of publication of the patent specification:
07.02.90

(21) Application number: **86850051.3**

(22) Date of filing: **17.02.86**

(51) Int. Cl. ⁵: **B 25 H  1/10, B 60 P  3/00**

(54) Motordriven vehicle for assembly and transport of heavy components, such as engines, transmissions, etc.

(30) Priority: **26.02.85 SE 8500939**

(43) Date of publication of application:
**10.09.86 Bulletin 86/37**

(45) Publication of the grant of the patent:
**07.02.90 Bulletin 90/06**

(84) Designated Contracting States:
**BE DE FR GB IT NL SE**

(56) References cited:
**GB-B-1 363 344**
**SE-B-392 588**
**SE-B-392 589**
**US-A-3 110 279**

(73) Proprietor: **BT Carrier Systems AB**
**Argongatan 30**
**S-431 53 Mölndal (SE)**

(72) Inventor: **Fäger, Gunnar**
**Gamla Kungsvägen 79**
**S-54132 Skövde (SE)**

(74) Representative: **Norin, Klas**
**Kooperativa förbundet Patent Department P.O. Box 15200**
**S-104 65 Stockholm (SE)**

2

## Description

The present invention relates to a transport vehicle for assembly and transport of heavy components, such as engine parts and complete engines, during assembly operations, comprising a support frame with at least three wheels, at least one of which is steerable and at least one of which is drivable by a motor, and a stand carried by the support frame, said stand carrying a rotatably mounted fastening means for the components.

Swedish Lay-open print 392 588 reveals a transport vehicle of the above mentioned type, which is used as a carrier for final assembly of gasoline engines for passenger cars, i.e. for relatively light engines. This carrier vehicle has a fastening means with a turntable rotatable about a horizontal axis, to which turntable the rear end of the engine block is fixed. The fastening means itself is in turn rotatable about an axis inclined at a 45° angle to the horizontal plane, which means that all sides of the engine except the gearbox plane can be placed in a horizontal position. All of the repositioning operations are done manually with very little physical exertion required by virtue of the fact that the engines are relatively light and that the repositioning operations are done without changing appreciably the position of the engine center of gravity.

Heavier components, such as engines in weight classes from about 150 kg to 1 600 kg cannot, for practical reasons, be assembled on carriers of the type described above. On the one hand, the manual repositioning operations would be too strenuous for the assemblers and, on the other hand, the carrier vehicle would have to be unreasonably broad to assure stability when rotating the fastening means about the 45° axis. Furthermore, the front end in the horizontal position would be at too high a level from an ergonometric point of view.

For these reasons and others self-propelled vehicles of this type have not been used for assembly of heavy components. The most common method of assembly up to now has been to move the components between various types of handling equipment or to disregard ergonometric requirements. The effects thereof have ranged from physical wear and possible disability of the assembly worker, handling damage to the components, bottom necks and reduced quality and profitability.

The purpose of the present invention is in general to achieve a carrier vehicle of the type described by way of introduction, which can be used for assembly of engines in the above mentioned heavy weight classes for examples.

This is achieved according to the invention by virtue of the fact that the fastening means is mounted on a carriage or slide displaceable along guides on the frame, said guides having portions with different angles of incline relative to a vertical plane to permit tipping of the fastening means.

The invention is based on the concept of dividing the assembly into two main steps, the first step involving the precision mounting of heavier components in the engine body using a steady indexable assembly line system with assembly units which can provide the desired quality and correct ergonomic design. The second assembly stage involves mounting of the transmission, the valve mechanisms, the fuel and lubrication systems and all of the external components. This is done on a carrier vehicle according to the invention, which thereby acts as a universal handling apparatus, providing wide variability to provide good access at the correct working height to all sides of the engine except the gearbox plane. By allowing the tipping to be carried out as the engine is lowered, the front end thereof will automatically end up at an ergonomically suitable level.

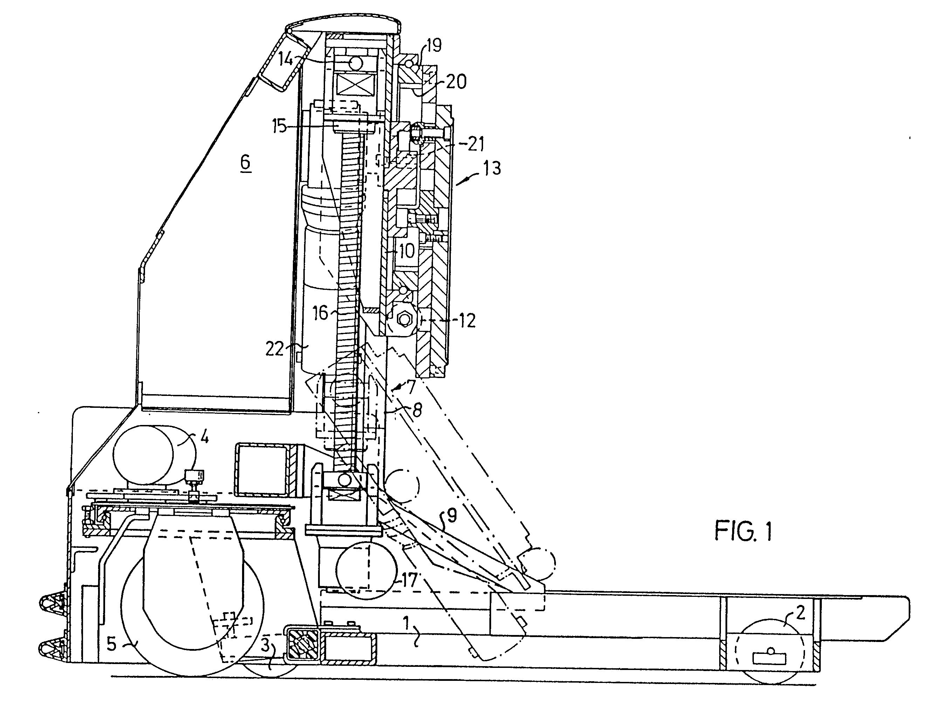

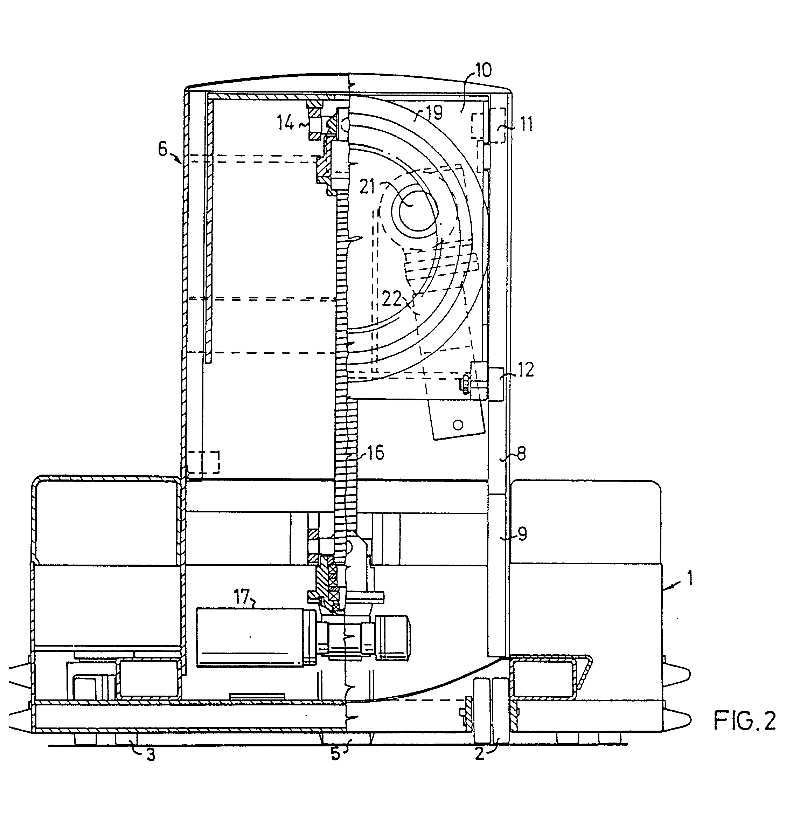

The invention will be described in more detail with reference to an example shown in the accompanying drawing, where Fig 1 shows partially in section a side view of a carrier vehicle according to the invention, and Fig 2 shows partially in section a front view of the carrier vehicle in Fig 1.

The vehicle has a support frame 1 with a pair of fixed wheels 2, a pair of runners 3 and a wheel 5 which can be steered by a steering motor 4. The steerable wheel 5 is driven by a drive motor (not shown). The carrier vehicle is of the type which is designed to be remote-controlled in a known manner via signals from a control loop embedded in the floor, but the particulars concerning the remote-control system do not constitute a part of the present invention and will therefore not be shown or described in more detail here.

The support frame 1 carries a stand, generally designated 6, on one side of which a pair of parallel rails 7 are mounted. The rails have a vertical upper portion 8 and an inclined lower portion 9, and serve as a guide means for a carriage 10 for the fastening means, which is designed to carry an engine at its gearbox plane. The carriage 10 has an upper pair of wheels 11 which run against the side of the rails facing away from the carriage, and a lower pair of wheels 12 running against the side of the rails facing the carriage to take up the tipping moment which an engine carried by the fastening means 13 exerts on the carriage 10. At its upper edge, the carriage 10 is linked via shafts 14 with a ball-nut arrangement 15, which engages a screw 16 rotatably journalled in the stand, and which at its lower end is drivingly connected to a motor 17.

Rotation of the screw 16 with the aid of the motor 17 displaces the ball-nut and thus the carriage 10 upwards or downwards on the stand depending on the direction of rotation, thus making it possible to place the engine carried by the fastening means at a level which is comfortable for the assembly worker regardless of whether he is short or tall. The adjustment is done with the aid of manual control means (not shown) disposed on the stand.

As the carriage 10 is displaced downwards along the vertical portion 8 of the rails, the engine is displaced parallelly. When the lower pair of wheels 12 of the carriage roll out onto the inclined lower portion 9 of the rails, the carriage will tip and finally assume the position shown with dash-dot lines in Fig 1. In the example shown in the Figures, the carriage is tipped at most 35° from its vertical position, but this angle can of course be varied for different applications.

In order to further facilitate access to the engine, the fastening means 13 is rotatable on the carriage 10. For this purpose the fastening means is fixed to a turntable 19 mounted on the carriage. The turntable 19 has an internal toothed rim 20 in engagement with a gear 21, which via a conical transmission is driven by a drive motor 22 carried by the carriage.

In the preceding, the invention has been described with reference to an example relating to engine assembly, but the principle of the invention is of course not limited thereto. Rather, the carrier vehicle can of course also be used, after suitable adaption, as a handling apparatus for other heavy components than combustion engine components.

## Claims

1. Vehicle for assembly and transport of components such as engine components or complete engines, comprising a support frame with at least three wheels, at least one of which is steerable and at least one of which is drivable by a motor, and a stand carried by the support frame, said stand carrying a rotatably mounted fastening means for the components, characterized in that the fastening means (13) is mounted on a carriage or slide (10) displaceable along guides (7) on the frame, said guides having an upper portion (8) lying in a vertical plane, and a lower portion (9) inclined relative to said plane, such that a component, the rear plane of which is fixed in the fastening means, can be vertically moveable as a whole and can be tipped up as the carriage or slide (10) passes from the vertical to the inclined portion.

2. Vehicle according to Claim 1, characterized in that the guides are formed by a pair of parallel rails (7) and that the fastening means (13) is carried by a carriage (10) with an upper wheel pair (11) running against the side of the rails facing away from the fastening means, and a lower wheel pair (12) running against the side of the rails facing the fastening means.

3. Vehicle according to Claims 1 or 2, characterized in that the carriage or slide (10) can be driven along the guides (7) by means of a screw (16) rotatably journalled in the stand and driven by a drive motor (17), which screw engages a nut device (15) joined to the carriage or slide.

4. Vehicle according to any one of Claims 1 - 3, characterized in that the carriage or slide (10) carries a drive motor (22) with a driven gear (21) which engages a toothed rim (20) on the fastening means (13).

## Patentansprüche

1. Fahrzeug zur Aufnahme und zum Transport von Teilen wie zum Beispiel Motoren-Teilen oder vollständigen Motoren, mit einem Träger-Rahmen mit wenigstens drei Rädern, von denen wenigstens eines steuerbar und von denen wenigstens eines von einem Motor antreibbar ist, einem von dem Träger-Rahmen getragenen Gestell, das eine drehbar montierte Halteeinrichtung für die Teile trägt, dadurch gekennzeichnet, daß die Halteeinrichtung (13) auf einem Wagen oder Schlitten (10) montiert ist, der längs Führungen (7) auf dem Rahmen verschiebbar ist, daß die Führungen einen oberen Abschnitt (8) haben, der in einer vertikalen Ebene liegt, sowie einen unteren Abschnitt (9), der relativ zu dieser Ebene geneigt ist, so daß ein Teil, dessen hintere Ebene in der Halteeinrichtung befestigt ist, als Ganzes vertikal bewegbar ist und hochgekippt werden kann, wenn der Wagen oder Schlitten (10) von dem vertikalen in den geneigten Abschnitt läuft.

2. Fahrzeug nach Anspruch 1, dadurch gekennzeichnet, daß die Führungen aus einem Paar paralleler Schienen (7) gebildet sind und daß die Halteeinrichtung (13) von einem Wagen (10) getragen ist mit einem oberen Paar Räder (11), die gegen die Seite der Schienen anlaufen, die weg von der Halteeinrichtung gerichtet ist und einem unteren Paar Räder (12), die gegen die Seite der Schienen anlaufen, die auf die Halteeinrichtung zu gerichtet ist.

3. Fahrzeug nach Anspruch 1 oder 2, dadurch gekennzeichnet, daß der Wagen oder Schlitten (10) längs der Führungen (7) mittels einer Schraubspindel (16) antreibbar ist, die drehbar in dem Gestell gelagert und von einem Antriebsmotor (17) angetrieben ist, und daß die Schraubspindel in Eingriff mit einer Mutter (15) steht, die mit dem Wagen oder schlitten verbunden ist.

4. Fahrzeug nach einem der Ansprüche 1 - 3, dadurch gekennzeichnet, daß der Wagen oder Schlitten (10) einen Antriebsmotor (22) trägt mit einem angetriebenen Zahnrad (21), das in Eingriff steht mit einem verzahnten Rand (20) an der Halteeinrichtung (13).

## Revendications

1. Véhicule pour le montage et le transport de composants tels que des composants de moteurs, ou de moteurs complets, comprenant un châssis de support avec au moins trois roues, dont l'une au moins est directrice et dont une au moins peut être entrainée par un moteur, et un bâti porté par le châssis de support, ledit bâti portant un dispositif de fixcation pour les composants monté rotatif, caractérisé en ce que le dispositif de fixation (13) est monté sur un chariot ou un organe coulissant (10) mobile le long de guides (7) sur le châssis, lesdits guides ayant une partie supérieure (8) située dans un plan vertical, et une portion inférieure (9) inclinée par rapport audit plan, de sorte qu'un composant, dont le plan arrière est fixé dans le dispositif de fixation, peut être déplacé verticalement dans son ensemble et peut être basculé lorsque le chariot ou l'organe coulissant (10) passe de la verticale à la partie inclinée.

2. Véhicule suivant la revendication 1, caractérisé en ce que les guides sont formés par deux rails parallèles (7) et en ce que le dispositif de fixation (13) est porté par un chariot (10) avec une paire de roues supérieures (11) roulant contre les côtés des rails dirigés à l'extérieur du dispositif de fixation, et une paire de roues inférieures (12) roulant contre les côtés des rails dirigés vers le dispositif de fixation.

3. Véhicule suivant la revendication 1 ou 2, caractérisé en ce que le chariot ou organe coulissant (10) peut être entraîné le long des guides (7) au moyen d'une vis (16) tourillonnant dans le bâti et entrainée par un moteur d'entraînement (17), cette vis attaquant un dispositif à noix (15) relié au chariot ou organe coulissant.

4. Véhicule suivant l'une quelconque des revendications 1 à 3, caractérisé en ce que le chariot ou organe coulissant (10) porte un moteur d'entraînement (22) avec un pignon mené (21) qui coopère avec une couronne dentée (20) sur le dispositif de fixation (13).

FIG. 1

FIG.2